# FASCICULE DE BREVET EUROPEEN

(11) **EP 2 109 562 B1**
(45) Date de publication et mention de la délivrance du brevet: **10.04.2013**
(21) Numéro de dépôt: 08761893.0
(22) Date de dépôt: 07.01.2008
(51) Int. Cl.: B60K 6/52, B60K 23/08, B60W 10/119, B60W 10/11, B60W 10/14, B60W 30/045, B60W 10/06, B60W 10/08, B60W 20/00, B60W 30/02

(54) **SYSTEME ET PROCEDE DE COMMANDE D'UN GROUPE MOTOPROPULSEUR HYBRIDE POUR UN FONCTIONNEMENT EN MODE QUATRE ROUES MOTRICES PERMANENT**
SYSTEM UND VERFAHREN ZUR STEUERUNG EINER HYBRIDSTROM-ANTRIEBSEINHEIT FÜR PERMANENTEN BETRIEB IM VIERRADANTRIEBSMODUS
SYSTEM AND METHOD FOR CONTROLLING A HYBRID POWER PROPULSION UNIT FOR A PERMANENT FOUR WHEEL DRIVE MODE OPERATION

(30) Priorité: 19.01.2007 FR 0752771
(43) Date de publication de la demande: 21.10.2009
(73) Titulaire: Renault SAS, 92100 Boulogne Billancourt (FR)
(72) Inventeur: FAUVEL, François, F-91470 Boullay Les Troux (FR); OUAGUENOUNI, Tariq, F-92330 Sceaux (FR); ROUDEAU, Frédéric, F-94400 Vitry Sur Seine (FR)
(86) Numéro de dépôt international: PCT/FR2008/050015
(87) Numéro de publication internationale: WO 2008/102088

(56) Documents cités:
- EP-A2- 1 393 951
- US-A1- 2002 087 252
- US-A1- 2006 076 915
- US-B1- 6 205 379

## Description

La présente invention concerne un système de commande d'un groupe motopropulseur hybride pour un véhicule automobile à quatre roues motrices pouvant combiner un mode quatre roues motrices permanent et une réduction de la consommation de carburant.

L'augmentation du prix du pétrole a rendu la réduction de la consommation de carburant des véhicules automobiles à la fois nécessaire et économiquement viable. Les techniques associées à la réduction de consommation de carburant ont d'abord été appliquées à des véhicules susceptibles de toucher un large public, généralement des automobiles de type berline ou citadine. Devant le durcissement prévu des législations envers les véhicules affichant une consommation de carburant élevée, en particulier envers les véhicules dits quatre roues motrices, il est devenu intéressant de faire bénéficier ces véhicules des techniques de réduction de consommation de carburant et de pollution, comme les propulsions hybrides. Cependant, peu de recherches ont été menées pour concilier réduction de la consommation de carburant et gestion de la motricité d'un véhicule à quatre roues motrices permanentes.

US 2002/0087252 décrit un système de commande d'un groupe motopropulseur de type hybride pour véhicule automobile à quatre roues motrices, comprenant au moins un organe moteur électrique et au moins un organe moteur thermique, capable d'entraîner les essieux moteurs indépendants avant et arrière du véhicule, caractérisé par le fait qu'il comprend un moyen de détermination de la consigne de couple total à partir des demandes du conducteur, un moyen de répartition de la consigne de couple total et un moyen d'optimisation du point de fonctionnement, aptes à déterminer dynamiquement les couples à appliquer à chacun des deux essieux moteur et à optimiser le fonctionnement du groupe motopropulseur selon la motricité demandée par le conducteur et les conditions de roulage.

La demande de brevet FR2654682 divulgue le fonctionnement d'un véhicule à quatre roues motrices équipé d'une propulsion thermique classique. On y décrit les organes et les méthodes de répartition du couple moteur sur les deux trains moteurs. Cependant, les propulsions hybrides ne semblent pas prises en compte. Il n'est donc pas possible d'optimiser le point de fonctionnement du groupe motopropulseur pour diminuer la consommation de carburant.

La demande de brevet FR2827339 divulgue un système de commande d'un groupe motopropulseur hybride comprenant des moyens d'optimisation du point de fonctionnement du groupe motopropulseur et des moyens de saturation dynamique de la consigne demandée par le conducteur. Cependant, il n'est fait aucune mention d'une distinction entre couple imposé au train avant et couple imposé au train arrière. Il est donc impossible de prendre en compte une consigne de couple imposée au train arrière dans le cadre d'un mode de fonctionnement quatre roues motrices.

Le brevet US6205379 décrit un système de commande d'une propulsion hybride pour un véhicule automobile comprenant deux trains moteurs. Ce système de commande intègre notamment des stratégies de pilotage de propulsions électriques dans des situations de faible adhérence et/ou des situations de forte déclivité. Ces stratégies correspondent à des applications spécifiques d'un mode quatre roues motrices. Il n'est pas fait mention d'une prise en compte d'un mode quatre roues motrices permanent demandé par le conducteur. Il n'est pas fait mention non plus d'une saturation dynamique des consignes du train arrière.

La demande de brevet FR2799417 décrit un système de commande d'un véhicule comportant quatre roues motrices et au moins une source motrice pour chacun des deux trains avant et arrière. Il n'est fait aucune mention d'un système de saturation dynamique des consignes ni d'une prise en compte d'un mode quatre roues motrices permanent demandé par le conducteur.

La demande de brevet JP2001171378 décrit un système de commande d'un véhicule à quatre roues motrices permettant de gérer le couple aux roues grâce à des caractéristiques cartographiées fonction des états du véhicule et l'état de la route. Ici encore il n'est fait aucune mention d'un système de saturation dynamique des consignes ni d'une prise en compte d'un mode quatre roues motrices permanent demandé par le conducteur.

L'invention a pour objet de réduire la consommation de carburant tout en conservant la possibilité de fonctionner en mode quatre roues motrices permanent.

L'invention a également pour objet de tenir compte dynamiquement des conditions de roulage dans la détermination des différents paramètres de fonctionnement.

Dans un mode de réalisation, un système de commande d'un groupe motopropulseur de type hybride pour véhicule automobile à quatre roues motrices, comprend au moins un organe moteur électrique et au moins un organe moteur thermique capables d'entraîner les essieux moteurs indépendants avant et arrière du véhicule. Le système de commande comprend un moyen de détermination de la consigne de couple total à partir des demandes du conducteur, un moyen de répartition de la consigne de couple total et un moyen d'optimisation du point de fonctionnement. Ce système est apte à déterminer dynamiquement les couples à appliquer à chacun des deux essieux moteurs et à optimiser le fonctionnement du groupe motopropulseur, selon la motricité demandée par le conducteur et les conditions de roulage.

Le système de commande est capable de déterminer dans un premier temps la consigne de couple total correspondant à la demande du conducteur. Cette consigne est ensuite répartie en consignes de couple aux trains avant et arrière. Cette décomposition tient compte des paramètres et de l'état du système électrique ainsi que des conditions de roulage. Par conditions de roulage, on entend l'adhérence, la déclivité et tout paramètre pouvant être détecté par le véhicule et ayant une influence sur son comportement. La décomposition tient également compte de la présence d'une requête du conducteur pour un mode quatre roues motrices permanent. Dans ce cas, une consigne de couple arrière est imposée, réduisant les possibilités de répartition du couple total. Pour finir, cette paire de consignes de couple aux trains arrière et avant est traduite en consignes de fonctionnement du groupe motopropulseur et optimisées pour réduire la consommation de carburant du véhicule ainsi que ses émissions de polluants.

Il est intéressant de noter que la présence d'une consigne de couple imposée au train arrière lors de la décomposition, implique une réduction du nombre d'états de fonctionnement du groupe motopropulseur. L'optimisation qui a lieu avant l'émission des consignes de fonctionnement est alors limitée aux états disponibles, d'où une efficacité moindre en terme de réduction de la consommation de carburant dans le cas de l'activation du mode quatre roues motrices permanent.

Dans un mode de réalisation, le système de commande peut comprendre une boite de vitesses, un moyen de commande de la boite de vitesses, une interface entre le conducteur et le véhicule et un moyen de contrôle de la stabilité et de la trajectoire du véhicule capable d'imposer une consigne de couple arrière en fonction d'une motricité demandée par le conducteur et des conditions de roulage. Le moyen de détermination de la consigne de couple total à partir des demandes du conducteur est relié par ses entrées à l'interface entre le conducteur et le véhicule et au moyen de commande de la boite de vitesses, et par ses sorties au moyen de répartition de la consigne de couple total et au moyen de contrôle de la stabilité et de la trajectoire du véhicule. Le moyen de détermination de la consigne de couple total est capable de traduire les exigences du conducteur en consigne de couple total.

Le système de commande peut comprendre un moyen de commande électrique. Dans un tel système, le moyen de répartition de la consigne de couple total est connecté par ses entrées au moyen de détermination de la consigne de couple total à partir des demandes du conducteur, au moyen de commande électrique et au moyen de contrôle de la stabilité et de la trajectoire du véhicule, et par ses sorties au moyen d'optimisation du point de fonctionnement. Le moyen de répartition de la consigne de couple total est capable de déterminer la répartition du couple total entre les essieux avant et arrière en fonction du couple et de la puissance disponibles pour les organes moteurs électriques ainsi que de la consigne de couple imposée au train arrière par le moyen de contrôle de la stabilité et de la trajectoire du véhicule.

Dans un système de commande comprenant un moyen de commande de l'organe moteur thermique, le moyen d'optimisation du point de fonctionnement est relié au moyen de répartition de la consigne de couple et par ses sorties au moyen de commande électrique, au moyen de commande de l'organe moteur thermique et de la trajectoire du véhicule et au moyen de commande de la boite de vitesses. Le moyen d'optimisation du point de fonctionnement est capable de déterminer les paramètres de fonctionnement des différents organes moteurs ainsi que le rapport de la boite de vitesses.

Un autre aspect de l'invention est un procédé de commande dans lequel on détermine le rapport de la boite de vitesses et les consignes de fonctionnement et de couple des organes moteurs de façon à optimiser le fonctionnement du groupe motopropulseur selon que le conducteur demande un fonctionnement quatre roues motrices ou un fonctionnement minimisant la consommation de carburant.

Dans un mode de mise en oeuvre, on optimise le fonctionnement du groupe motopropulseur en maximisant les performances quatre roues motrices au détriment de la consommation de carburant tout en respectant le couple total requis par le conducteur, lorsque le conducteur demande un fonctionnement quatre roues motrices maximisant les performances motrices.

Dans un autre mode de mise en oeuvre, on optimise le fonctionnement du groupe motopropulseur en minimisant la consommation de carburant au détriment des performances quatre roues motrices tout en respectant le couple total requis par le conducteur, lorsque le conducteur demande un fonctionnement minimisant la consommation de carburant.

Lorsque le conducteur demande un fonctionnement quatre roues motrices, on impose une consigne de couple arrière non nulle variant dynamiquement.

Lorsque le conducteur demande un fonctionnement minimisant la consommation de carburant, on impose une consigne de couple arrière permettant d'optimiser la consommation de carburant.

En effet, le train arrière étant relié aux organes moteurs électriques, tout le couple pouvant être reporté sur les organes moteurs électriques diminue d'autant le couple devant être fourni par l'organe moteur thermique. La consommation de carburant peut donc être réduite.

D'autres buts, caractéristiques et avantages de l'invention apparaîtront à la lecture de la description suivante, donnée uniquement à titre d'exemple non limitatif et faite en référence au dessin annexé sur lequel :

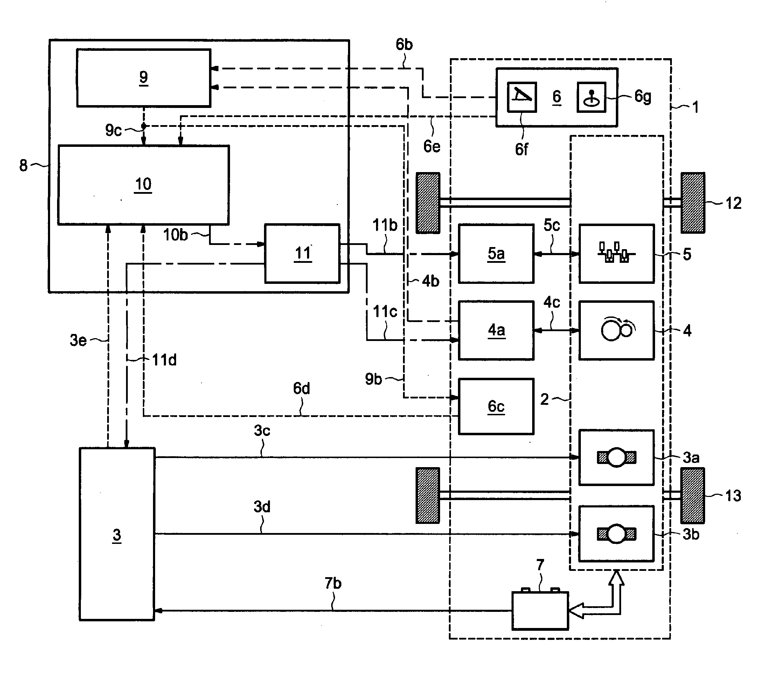

- la figure 1 représente schématiquement les principaux éléments d'un système selon l'invention dans lequel on commande la boite de vitesses, les organes moteurs électriques et thermique en fonction des demandes du conducteur.

La figure 1 représente un système de commande d'un groupe motopropulseur hybride. Un véhicule 1 comprend un groupe motopropulseur 2 comportant, pour cet exemple et de façon non limitative, deux organes moteur électriques 3a et 3b, une boite de vitesses 4 et un organe moteur thermique 5. Le véhicule comprend également une interface 6 entre le conducteur et le véhicule, un moyen 5a de commande de l'organe moteur thermique 5 relié à ce dernier par la liaison 5c, un moyen 4a de commande de la boite 4 de vitesses relié à cette dernière par la liaison 4c, un moyen 6c de contrôle de la stabilité et de la trajectoire du véhicule, des batteries 7, un train moteur et indépendant avant 12 et arrière 13, comprenant chacun une paire de roues, reliées par un axe et couplés au groupe motopropulseur par un système de distribution non représenté. L'interface 6 entre le conducteur et le véhicule comprend entre autres, la pédale d'accélérateur 6f et le levier de vitesses 6g.

Le moyen de commande électrique 3 commande les deux organes moteurs électriques 3a et 3b grâce aux liaisons respectives 3c et 3d. Le moyen de commande électrique 3 reçoit également des informations provenant de la batterie 7 par la liaison 7b.

L'unité de commande électronique 8 du groupe motopropulseur comprend un moyen 9 de détermination de la consigne de couple total à partir des demandes du conducteur, un moyen 10 de répartition de la consigne de couple total et un moyen 11 d'optimisation du point de fonctionnement.

Le moyen 9 de détermination de la consigne de couple total reçoit sur ses entrées les informations provenant du moyen 4a de commande de la boite de vitesses par la liaison 4b et des signaux de l'interface 6 entre le conducteur et le véhicule par la liaison 6b. Le moyen 9 de détermination de la consigne de couple total émet une consigne de couple totale correspondant à la demande du conducteur vers le moyen 10 de répartition de la consigne de couple par la liaison 9c et au moyen 6c de contrôle de la stabilité et de la trajectoire du véhicule par la liaison 9b.

Le moyen 10 de répartition de la consigne de couple reçoit sur ses entrées des informations du moyen 9 par la liaison 9c, du moyen 3 de commande électrique transmises par la liaison 3e, et de l'interface 6 entre le conducteur et le véhicule par la liaison 6c et du moyen 6c de contrôle de la stabilité et de la trajectoire du véhicule par la liaison 6d, et émet des signaux par la liaison 10b vers le moyen 11 d'optimisation du point de fonctionnement.

Le moyen 11 d'optimisation du point de fonctionnement reçoit des signaux provenant du moyen 10 par la liaison 10b et émet des signaux de commande vers le moyen 3 de commande électrique par la liaison 11d, au moyen 4a de commande de la boite 4 de vitesses par la liaison 11c et au moyen 5a de commande de l'organe moteur thermique 5 par la liaison 11b. Les moyens 4a, 5a et 3 traduisent ces signaux en signaux de commande interprétables par les organes 4, 5, 3a et 3b, respectivement.

Le conducteur donne une consigne de couple, via la pédale d'accélérateur 6f et le levier de vitesses 6g, de l'interface 6 entre le conducteur et le véhicule qui est transmise au moyen 9 de détermination de la consigne de couple total. Le moyen 9 détermine la consigne de couple totale correspondant à la demande du conducteur en prenant en compte le rapport de boite de vitesses. Cette consigne est alors transmise au moyen 10 de répartition de la consigne de couple et au moyen 6c de contrôle de la stabilité et de la trajectoire du véhicule.

Le moyen 6c de contrôle de la stabilité et de la trajectoire du véhicule transmet en retour au moyen 10 de répartition de la consigne de couple, une valeur de couple arrière imposé si le conducteur a déterminée dynamiquement selon les conditions de roulage. Le moyen 10 de répartition de la consigne de couple détermine alors la répartition du couple total entre les trains avant 12 et arrière 13 en prenant en compte les informations d'état du système électrique. Les consignes de couple avant et arrière ainsi déterminées sont alors transmises au moyen 11 d'optimisation du point de fonctionnement.

Le moyen 11 d'optimisation du point de fonctionnement détermine les paramètres de fonctionnement du groupe motopropulseur 2 pour optimiser la consommation de carburant et réduire les émissions de polluants ou pour optimiser les performances motrices, selon les désirs du conducteur. Le moyen 11 d'optimisation transmet les consignes au moyen 3 de commande électrique, au moyen 4a de commande de la boite de vitesses et au moyen 5a de commande de l'organe moteur thermique.

L'invention telle que décrite ici gère un groupe motopropulseur hybride dans une logique de couple aux roues. Le même système et le même procédé pourraient être employés dans le cadre d'une logique d'effort aux roues.

## Revendications

1. Système de commande d'un groupe motopropulseur de type hybride pour véhicule automobile à quatre roues motrices, comprenant au moins un organe moteur électrique (3a) et au moins un organe moteur thermique (5), capable d'entraîner les essieux moteurs indépendants avant (12) et arrière (13) du véhicule, et un moyen (9) de détermination de la consigne de couple total à partir des demandes du conducteur,
comprenant
un moyen (6c) de contrôle de la stabilité et de la trajectoire du véhicule apte à déterminer une valeur de couple arrière imposé si le conducteur a demandé un mode quatre roues motrices permanent, cette valeur de couple arrière imposé étant déterminée dynamiquement selon les conditions de roulage,
un moyen (10) de répartition de la consigne de couple total en consigne de couple sur les trains avant et arrière en fonction de la présence d'une requête du conducteur pour le mode quatre roues motrices, la consigne de couple arrière imposé réduisant les possibilités de répartition du couple total et le nombre d'états de fonctionnement du groupe motopropulseur et
un moyen (11) d'optimisation du point de fonctionnement du groupe motopropulseur apte à déterminer les paramètres de fonctionnement du groupe motopropulseur en fonction de la requête du conducteur soit pour une optimisation de la consommation de carburant et une réduction des émissions de polluants, soit pour une optimisation des performances motrices l'optimisation étant limitée aux états disponibles du groupe motopropulseur, le moyen (11) d'optimisation du point de fonctionnement étant aptes à déterminer dynamiquement les couples à appliquer à chacun des deux essieux moteur

2. Système selon la revendication 1 comportant une boite de vitesses (4), un moyen (4a) de commande de la boite de vitesses, une interface (6) entre le conducteur et le véhicule,
dans lequel le moyen (9) de détermination de la consigne de couple total à partir des demandes du conducteur est relié par ses entrées à l'interface (6) entre le conducteur et le véhicule et au moyen (4a) de commande de la boite de vitesses, et par ses sorties au moyen (10) de répartition de la consigne de couple total et au moyen (6c) de contrôle de la stabilité et de la trajectoire du véhicule, le moyen (9) de détermination de la consigne de couple total à partir des demandes du conducteur étant capable de traduire les exigences du conducteur en consigne de couple total.

3. Système selon la revendication 2 comportant un moyen (3) de commande électrique dans lequel le moyen (10) de répartition de la consigne de couple total est connecté par ses entrées au moyen (9) de détermination de la consigne de couple total à partir des demandes du conducteur, au moyen (3) de commande électrique et au moyen (6c) de contrôle de la stabilité et de la trajectoire du véhicule, et par sa sortie au moyen (11) d'optimisation du point de fonctionnement, le moyen (10) de répartition de la consigne de couple total étant capable de déterminer la répartition du couple total entre les essieux avant (12) et arrière (13) en fonction du couple et de la puissance disponibles pour les organes moteurs électriques (3a et 3b) ainsi que de la consigne de couple imposée au train arrière (13) par le moyen (6c) de contrôle de la stabilité et de la trajectoire du véhicule.

4. Système selon la revendication 3 comportant un moyen (5a) de commande de l'organe moteur thermique, dans lequel le moyen (11) d'optimisation du point de fonctionnement est relié par son entrée au moyen (10) de répartition de la consigne de couple et par ses sorties au moyen (3) de commande électrique, au moyen (5a) de commande de l'organe moteur thermique et au moyen (4a) de commande de la boite de vitesses, et le moyen (11) d'optimisation du point de fonctionnement étant capable de déterminer les signaux de commande du fonctionnement des différents organes moteurs ainsi que le signal de commande du rapport de la boite (4) de vitesses.

5. Procédé de commande d'un groupe motopropulseur de type hybride pour véhicule automobile à quatre roues motrices, comprenant au moins un organe moteur électrique et au moins un organe moteur thermique capable d'entraîner les essieux moteurs indépendants avant et arrière du véhicule, **caractérisé par** le fait les étapes suivantes :
on détermine la consigne de couple total à partir des demandes du conducteur,
on détermine une valeur de couple arrière imposé si le conducteur a demandé un mode quatre roues motrices permanent, cette valeur de couple arrière imposé étant déterminée dynamiquement selon les conditions de roulage,
on répartit la consigne de couple total en consigne de couple sur les trains avant et arrière en fonction de la présence d'une requête du conducteur pour le mode quatre roues motrices, la consigne de couple arrière imposé réduisant les possibilités de répartition du couple total et le nombre d'états de fonctionnement du groupe motopropulseur, et
on optimise le point de fonctionnement du groupe motopropulseur en fonction de la requête du conducteur soit pour une optimisation de la consommation de carburant et une réduction des émissions de polluants, soit pour une optimisation des performances motrices, l'optimisation étant limitée aux états disponibles du groupe motopropulseur,
on détermine le rapport de la boite de vitesses et les consignes de fonctionnement et de couple des organes moteurs en fonction du point de fonctionnement optimisé.

6. Procédé selon la revendication 5 dans lequel on optimise le fonctionnement du groupe motopropulseur en maximisant les performances quatre roues motrices au détriment de la consommation de carburant tout en respectant le couple total requis par le conducteur, lorsque le conducteur demande un fonctionnement quatre roues motrices maximisant les performances motrices.

7. Procédé selon la revendication 5 dans lequel on optimise le fonctionnement du groupe motopropulseur en minimisant la consommation de carburant au détriment des performances quatre roues motrices tout en respectant le couple total requis par le conducteur, lorsque le conducteur demande un fonctionnement minimisant la consommation de carburant.

8. Procédé selon la revendication 7 dans lequel on impose une consigne de couple arrière permettant d'optimiser la consommation de carburant, lorsque le conducteur demande un fonctionnement minimisant la consommation de carburant.

## Claims

1. System for controlling a power propulsion unit of the hybrid type for a four-wheel drive motor vehicle, comprising at least one electric motor member (3a) and at least one combustion engine member (5), capable of driving the independent front (12) and rear (13) driven axles of the vehicle, and a determining means (9) for determining the total torque setpoint on the basis of the demands of the driver,
comprising
a vehicle course and stability control means (6c) capable of determining an imposed rear torque value if the driver has demanded permanent four-wheel drive mode, this imposed rear torque value being determined dynamically according to the driving conditions,
a splitting means (10) for splitting the total torque setpoint torque setpoint between the front and rear axle assemblies as a function of whether the driver has requested four-wheel drive mode, the imposed rear torque setpoint reducing the possibilities for splitting the total torque, and the number of operating states of the power propulsion unit, and
a means (11) of optimizing the operating point of the power propulsion unit capable of determining the operating parameters of the propulsion unit according to the request of the driver either to optimize fuel consumption and reduce pollutant emissions or to optimize drive performance, optimization being limited to the available states of the power propulsion unit, the means (11) for optimizing the operating point being able dynamically to determine the torques to be applied to each of the two driven axles.

2. System according to Claim 1, comprising a gearbox (4), a gearbox control means (4a), and an interface (6) between the driver and the vehicle, in which the means (9) of determining the total torque setpoint from the demands of the driver is connected by its inputs to the interface (6) between the driver and the vehicle and to the gearbox control means (4a), and by its outputs to the means (10) of splitting the total torque setpoint and to the vehicle course and stability control means (6c), the means (9) of determining the total torque setpoint on the basis of the demands of the driver being capable of translating the wishes of the driver into total torque setpoint.

3. System according to Claim 2, comprising an electric control means (3), in which the means (10) of splitting the total torque setpoint is connected by its inputs to the means (9) of determining the total torque setpoint on the basis of the demands of the driver, to the electric control means (3) and to the vehicle course and stability control means (6c), and by its output to the means (11) of optimizing the operating point, the means (10) of splitting the total torque setpoint being capable of determining the split of total torque between the front (12) and rear (13) axle assemblies as a function of the torque and of the power which are available to the electric motor members (3a and 3b) and of the torque setpoint imposed on the rear axle assembly (13) by the vehicle course and stability control means (6c).

4. System according to Claim 3, comprising a means (5a) of controlling the combustion engine member, in which the means (11) of optimizing the operating point is connected by its input to the means (10) of splitting the torque setpoint and by its outputs to the electric control means (3), to the combustion engine member control means (5a) and to the gearbox control means (4a), and the means (11) of optimizing the operating point being capable of determining the control signals that control the operation of the various engine and motor members and the gearbox (4) ratio control signal.

5. Method of controlling a power propulsion unit of the hybrid type for a four-wheel drive motor vehicle, comprising at least one electric motor member and at least one combustion engine member capable of driving the independent front and rear driven axles of the vehicle, **characterized in that** it comprises the following steps:
the total torque setpoint is determined on the basis of the demands of the driver,
an imposed rear torque value is determined if the driver has demanded permanent four-wheel drive mode,
this imposed rear torque value being determined dynamically according to the driving conditions,
the total torque setpoint is split as torque setpoint between the front and rear axle assemblies according to whether the driver has requested four-wheel drive mode,
the imposed rear torque setpoint reducing the possibilities of splitting the total torque and the number of operating states of the power propulsion unit, and
the operating point of the power propulsion unit is optimized according to the request of the driver either to optimize fuel consumption and reduce pollutant emissions, or to optimize drive performance,
optimization being limited to the available states of the power propulsion unit,
the gearbox ratio and the operating and torque setpoints for the drive components are determined according to the optimized operating point.

6. Method according to Claim 5, in which the operation of the power propulsion unit is optimized by maximizing the four-wheel drive performance at the expense of fuel consumption while at the same time respecting the total torque required by the driver, when the driver is demanding four-wheel drive operation maximizing drive performance.

7. Method according to Claim 5, in which the operation of the power propulsion unit is optimized by minimizing fuel consumption at the expense of four-wheel drive performance while at the same time respecting the total torque required by the driver, when the driver is demanding operation that minimizes fuel consumption.

8. Method according to Claim 7, in which a rear torque setpoint that optimizes fuel consumption is imposed, when the driver is demanding operation that minimizes fuel consumption.

## Patentansprüche

1. Steuersystem einer Antriebseinheit des hybriden Typs für Kraftfahrzeug mit vier Antriebsrädern, das wenigstens ein elektrisches Antriebsorgan (3a) und wenigstens ein Verbrennungsmotororgan (5) aufweist, das geeignet ist, die unabhängige vordere (12) und hintere (13) Antriebsachse des Fahrzeugs anzutreiben, und ein Mittel (9) zum Bestimmen des Gesamtmomentsollwerts ausgehend von den Anfragen des Fahrers,
das Folgendes aufweist:
ein Mittel (6c) zum Steuern der Stabilität und der Bahn des Fahrzeugs, das geeignet ist, einen hinteren Momentwert zu bestimmen, der auferlegt wird, wenn der Fahrer einen permanenten Allradantriebsmodus verlangt hat, wobei dieser auferlegte hintere Momentwert dynamisch gemäß den Fahrbedingungen bestimmt wird,
ein Mittel (10) zum Verteilen des Gesamtmomentsollwerts als Momentsollwert auf die Vorderachse und die Hinterachse in Abhängigkeit von dem Anliegen einer Anfrage des Fahrers nach dem Allradantriebsmodus, wobei der auferlegte hintere Momentsollwert die Möglichkeiten des Verteilens des Gesamtmoments und die Anzahl von Betriebszuständen der Antriebseinheit verringert, und
ein Mittel (11) zum Optimieren des Betriebspunkts der Antriebseinheit, das geeignet ist, Betriebsparameter der Antriebseinheit in Abhängigkeit von der Fahreranfrage entweder nach einer Optimierung des Kraftstoffverbrauchs und einer Verringerung der Schadstoffemissionen oder nach einer Optimierung der Antriebsleistungen zu bestimmen, wobei die Optimierung auf die verfügbaren Zustände der Antriebseinheit beschränkt ist, wobei das Mittel (11) zum Optimieren des Betriebspunkts geeignet ist, dynamisch die Momente zu bestimmen, die an jede der zwei Antriebsachsen anzuwenden sind.

2. System nach Anspruch 1, das ein Schaltgetriebe (4), ein Mittel (4a) zum Steuern des Schaltgetriebes, eine Schnittstelle (6) zwischen dem Fahrer und dem Fahrzeug aufweist, bei dem das Mittel (9) zum Bestimmen des Gesamtmomentsollwerts ausgehend von den Anfragen des Fahrers durch seine Eingänge mit der Schnittstelle (6) zwischen dem Fahrer und dem Fahrzeug und mit dem Mittel (4a) zum Steuern des Schaltgetriebes verbunden ist, und durch seine Ausgänge mit dem Mittel (10) zum Verteilen des Gesamtmomentsollwerts und mit dem Mittel (6c) zum Steuern der Stabilität und der Bahn des Fahrzeugs, wobei das Mittel (9) zum Bestimmen des Gesamtmomentsollwerts ausgehend von den Anfragen des Fahrers fähig ist, die Forderungen des Fahrers in Gesamtmomentsollwert umzuwandeln.

3. System nach Anspruch 2, das ein elektrisches Steuermittel (3) aufweist, bei dem das Mittel (10) zum Verteilen des Gesamtmomentsollwerts durch seine Eingänge mit dem Mittel (9) zum Bestimmen des Gesamtmomentsollwerts ausgehend von den Anfragen des Fahrers, mit dem elektrischen Steuermittel (3) und dem Mittel (6C) zum Steuern der Stabilität und der Bahn des Fahrzeugs verbunden ist, und durch seinen Ausgang mit dem Mittel (11) zum Optimieren des Betriebspunkts, wobei das Mittel (10) zum Verteilen des Gesamtmomentsollwerts fähig ist, die Verteilung des Gesamtmoments auf die Vorderachse (12) und die Hinterachse (13) in Abhängigkeit von dem Moment und der Leistung, die für die elektrischen Antriebsorgane (3a und 3b) verfügbar sind, sowie von dem der Hinterachse (13) von dem Mittel (6c) zum Steuern der Stabilität und der Bahn des Fahrzeugs auferlegten Momentsollwert zu bestimmen.

4. System nach Anspruch 3, das ein Mittel (5a) zum Steuern des Verbrennungsmotororgans aufweist, bei dem das Mittel (11) zum Optimieren des Betriebspunkts durch seinen Eingang mit dem Mittel (10) zum Verteilen des Momentsollwerts verbunden ist und durch seine Ausgänge mit dem elektrischen Steuermittel (3), dem Mittel (5a) zum Steuern des Verbrennungsmotors und dem Mittel (4a) zum Steuern des Schaltgetriebes, und wobei das Mittel (11) zum Optimieren des Betriebspunkts fähig ist, die Steuersignale des Betriebs der verschiedenen Antriebsorgane sowie das Steuersignal des Gangs des Schaltgetriebes (4) zu bestimmen.

5. Verfahren zum Steuern einer Antriebseinheit des hybriden Typs für Kraftfahrzeug mit vier Antriebsrädern, das wenigstens ein elektrisches Antriebsorgan und wenigstens ein Verbrennungsmotororgan aufweist, das fähig ist, die unabhängige vordere und hintere Antriebsachse des Fahrzeugs anzutreiben, **dadurch gekennzeichnet, dass** es die folgenden Schritte aufweist:
Bestimmen des Gesamtmomentsollwerts ausgehend von den Fahreranfragen,
Bestimmen eines hinteren Momentwerts, der auferlegt wird, wenn der Fahrer einen permanenten Allradantriebsmodus verlangt hat, wobei dieser auferlegte hintere Momentwert dynamisch gemäß den Fahrbedingungen bestimmt wird,
Verteilen des Gesamtmomentsollwerts als Momentsollwert auf die Vorderachse und die Hinterachse in Abhängigkeit von dem Anliegen einer Anfrage des Fahrers nach dem Allradantriebsmodus, wobei der auferlegte hintere Momentsollwert die Möglichkeiten des Verteilens des Gesamtmoments und die Anzahl von Betriebszuständen der Antriebseinheit verringert, und
Optimieren des Betriebspunkts der Antriebseinheit in Abhängigkeit von der Fahreranfrage entweder nach einer Optimierung des Kraftstoffverbrauchs und einer Verringerung der Schadstoffemissionen oder nach einer Optimierung der Antriebsleistungen, wobei die Optimierung auf die verfügbaren Zustände der Antriebseinheit beschränkt ist,
Bestimmen des Gangs des Schaltgetriebes und der Betriebssollwerte und des Moments der Antriebsorgane in Abhängigkeit von dem optimierten Betriebspunkt.

6. Verfahren nach Anspruch 5, bei dem man den Betrieb der Antriebseinheit optimiert, indem man die Allradleistungen auf Kosten des Kraftstoffverbrauchs maximiert und gleichzeitig das von dem Fahrer geforderte Gesamtmoment einhält, wenn der Fahrer einen Allradbetrieb, der die Antriebsleistungen maximiert, verlangt.

7. Verfahren nach Anspruch 5, bei dem man den Betrieb der Antriebseinheit optimiert, indem man den Kraftstoffverbrauch auf Kosten der Allradleistungen minimiert und gleichzeitig das von dem Fahrer verlangte Gesamtmoment einhält, wenn der Fahrer einen Betrieb verlangt, der den Kraftstoffverbrauch minimiert.

8. Verfahren nach Anspruch 7, bei dem man einen hinteren Momentsollwert auferlegt, der es erlaubt, den Kraftstoffverbrauch zu optimieren, wenn der Fahrer einen Betrieb verlangt, der den Kraftstoffverbrauch minimiert.
